# EUROPEAN PATENT APPLICATION

(11) **EP 3 643 391 A2**
(43) Date of publication of application: **29.04.2020**
(21) Application number: 18820050.5
(22) Date of filing: 21.06.2018
(51) Int. Cl.: B01D 47/06, B01D 53/78, B01D 53/79, F01N 3/08, F01N 3/00, B01D 53/14, B01D 53/92

(54) **SCRUBBER**

(30) Priority: 22.06.2017 KR 20170079339; 27.07.2017 KR 20170095668; 02.01.2018 KR 20180000390
(71) Applicant: Korea Shipbuilding & Offshore Engineering Co., Ltd., Jongno-gu Seoul 03058 (KR)
(72) Inventor: SUNG, Sam-Kyung, Ulsan 44032 (KR); UM, Hyung-Sik, Ulsan 44032 (KR); MIN, Byeong-Su, Ulsan 44032 (KR); CHUNG, Mong-Kyu, Ulsan 44032 (KR); KIM, Dae-Hee, Ulsan 44032 (KR)
(74) Representative: Nederlandsch Octrooibureau
(86) International application number: PCT/KR2018/007021
(87) International publication number: WO 2018/236161

(57) **Abstract**

A scrubber is disclosed. A scrubber according to an embodiment of the present invention is installed inside a chimney and comprises: a housing; and a preprocessing unit for preprocessing exhaust gas, wherein the preprocessing unit is provided inside the housing, thereby decreasing the sectional area of the chimney, which otherwise would be increased to install the same inside the chimney.

## Description

### [Technical Field]

The present disclosure relates to a scrubber.

### [Background Art]

A scrubber functions to process exhaust gas, for example, to purify or cool exhaust gas emitted from an engine or a boiler.

A scrubber is connected to an engine or a boiler by an exhaust pipe to purify or cool exhaust gas. In the scrubber, a treatment liquid such as seawater, or the like, is supplied to the exhaust gas, introduced into the scrubber through the exhaust pipe, such that the treatment liquid absorbs a sulfur oxide or dust from the exhaust gas to purify or cool the exhaust gas. Thus, the exhaust gas is processed by the treatment liquid.

A conventional scrubber includes a pretreatment unit provided on the outside thereof. The scrubber may be installed in a funnel by increasing a cross-sectional area of the funnel. As described above, since the pretreatment unit is provided outside of the conventional scrubber, the funnel has a relatively large cross-sectional area which should be increased to install the scrubber.

Since a sulfur oxide, condensed from exhaust gas, corrodes the scrubber while processing an introduced exhaust gas, the scrubber should be formed of a relatively high-priced non-corrosive material. As a result, manufacturing of the scrubber may incur relatively high costs.

In addition, since the exhaust gas did not flow smoothly into the scrubber, processing efficiency of the scrubber is deteriorated.

### [Disclosure]

### [Technical Problem]

The present disclosure is based upon recognition of at least any one of the requirements or issues arising in the related art.

An aspect of the present disclosure is to provide a scrubber in which a pretreatment unit for pretreating exhaust gas is provided to decrease a cross-sectional area of a funnel which is increased to install the scrubber inside the funnel.

An aspect of the present disclosure is to provide a scrubber into which exhaust gas flows smoothly without being disturbed by a treatment gas.

An aspect of the present disclosure is to provide a scrubber having improved exhaust gas processing efficiency.

An aspect of the present disclosure is to reduce manufacturing costs of a scrubber.

An aspect of the present disclosure is to significantly reduce corrosion of a scrubber.

### [Technical Solution]

In order to address at least one of the above-mentioned issues, a scrubber according to example embodiments may have characteristics as described in the following:
According to an aspect of the present disclosure, a scrubber installed inside of a funnel includes: a housing; and a pretreatment unit configured to pretreat exhaust gas. The pretreatment unit is provided inside of the housing to reduce a cross-sectional area of the funnel increased for installation inside of the funnel.

In this case, the funnel may be provided on a ship, and the cross-sectional area of the funnel may be increased in a stern or bow direction of the ship to install the scrubber.

In addition, the cross-sectional area of the funnel may not be increased in a width direction of the ship.

In addition, the funnel may have a rectangular cross section.

In addition, the scrubber may have a rectangular cross section to significantly reduce a dead region inside of the funnel and a cross-sectional area of the funnel increased for installation inside of the funnel.

In addition, the scrubber includes: the housing installed inside of the funnel such that exhaust gas, introduced from an exhaust pipe installed inside of the funnel, is discharged while flowing in housing; the pretreatment unit provided in a treatment space, formed inside of the housing, to pretreat exhaust gas introduced into the treatment space; a posttreatment unit provided in the treatment space to posttreat the exhaust gas pretreated by the pretreatment unit; and a packing unit provided in a portion of the treatment space between the pretreatment unit and the posttreatment unit to increase a contact area between a posttreated exhaust gas and a treatment liquid.

In addition, the housing may be provided with an inlet duct, connected to the treatment space and an exhaust pipe, into which exhaust gas to be treated is introduced, and an outlet duct, connected to the treatment space, through which a treated exhaust is discharged.

In addition, the pretreatment unit may supply a treatment liquid to the exhaust gas, introduced through the inlet duct, to pretreat the exhaust gas, and the posttreatment unit may supply a treatment liquid to the exhaust gas, pretreated by the pretreatment unit, to posttreat the exhaust gas.

In addition, an internal surface of a portion of the housing, into which exhaust gas is introduced through the inlet duct, may be coated with a coating agent.

In addition, the coating agent may be polyvinyl ester.

In addition, the pretreatment unit may cool an introduced exhaust gas to a predetermined temperature or less at which the coating agent is not damaged.

In addition, the pretreatment unit may cool the introduced exhaust gas to a temperature of 120°C or less.

In addition, the pretreatment unit may cool the introduced exhaust gas to a temperature of 80°C or less.

In addition, the inlet duct may be provided in a lower portion of the housing, and the outlet duct may be provided in an upper portion of the housing.

In addition, the inlet duct may be provided on a side surface of a lower portion of the housing having a predetermined height from a bottom of the housing.

In addition, the inlet duct may be provided to be inclined toward the bottom of the housing at a predetermined angle.

In addition, the housing may be provided with a flow guide extending from the inlet duct to the treatment space in a length direction of the housing by a predetermined length.

In addition, the flow guide may have a length less than or equal to half of a length of the housing.

In addition, the flow guide may have opposite sides spaced apart from an internal surface of the housing by a predetermined distance.

In addition, each of the opposite surfaces of the flow guide may be inclined toward the treatment space from the inlet duct in a length direction of the housing.

### [Advantageous Effects]

As set forth above, according to an embodiment, a pretreatment unit for pretreating exhaust gas may be provided in a scrubber to decrease a cross-sectional area of a funnel which is increased to install the scrubber inside the funnel.

In addition, exhaust gas may smoothly flow into a scrubber without being disturbed by a treatment gas.

In addition, exhaust gas processing efficiency of a scrubber may be improved.

In addition, manufacturing costs of a scrubber may be reduced.

In addition, corrosion of a scrubber may be significantly reduced.

### [Description of Drawings]

FIG. 1 illustrates a scrubber according to an example embodiment of the present disclosure.
FIG. 2 illustrates a treatment unit and a treatment liquid supply unit included in a scrubber according to an example embodiment of the present disclosure.
FIG. 3 is a plan view of FIG. 1.
FIG. 4 is a partially cutaway side surface of FIG. 1.
FIG. 5 is a cross-sectional view taken along line I-I' of FIG. 1.
FIG. 6 is a cross-sectional view taken along line II-II' of FIG. 1.
FIG. 7 is a cross-sectional view of a first injection unit included in a pretreatment unit included in a treatment unit of a scrubber according to an example embodiment of the present disclosure.
FIG. 8 is a cross-sectional view of a second injection unit included in a pretreatment unit included in a treatment unit of a scrubber according to an example embodiment of the present disclosure.
FIG. 9 illustrates that a scrubber according to an example embodiment of the present disclosure is installed inside of a funnel to be connected to an engine, or the like.
FIG. 10 illustrates that a scrubber according to an example embodiment of the present disclosure is installed inside of a funnel of a ship.
FIG. 11 illustrates a comparison between a case, in which a scrubber according to an example embodiment of the present disclosure is installed inside of a funnel of a ship, and a case in which a scrubber according to a related art is installed inside of a funnel of a ship.
FIG. 12 illustrates a comparison between a case, in which a scrubber according to an example embodiment of the present disclosure is integrated with a funnel, and a case in which a scrubber according to a related art is installed inside of a funnel of a ship.
FIGS. 13 and 14 are conceptual diagrams illustrating examples of an inert gas supply device included in a scrubber according to an example embodiment of the present disclosure, respectively.

### [Mode for Invention]

Hereinafter, embodiments of the present disclosure will be described with reference to the accompanying drawings. However, the embodiments of the present disclosure may be modified in various forms, and the scope of the present disclosure is not limited to the embodiments. In the drawings, the shapes and dimensions of elements may be exaggerated for clarity, and the same reference numerals will be used throughout to designate the same or like elements.

### Scrubber

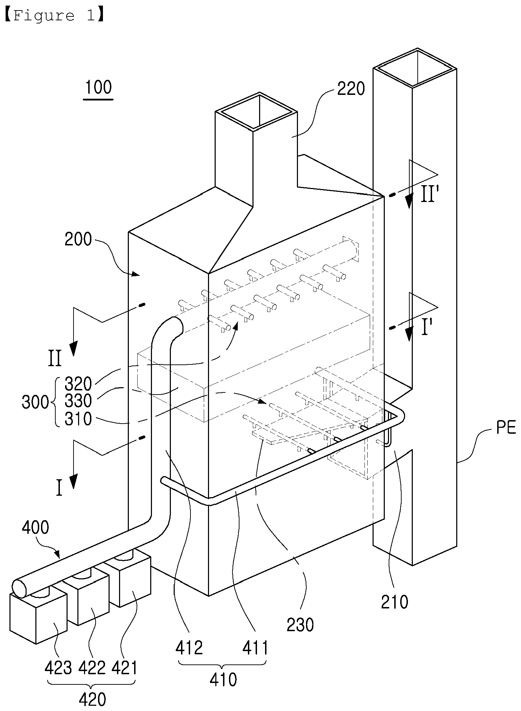

Hereinafter, a scrubber according to an example embodiment will be described with reference to FIGS. 1 to 12.

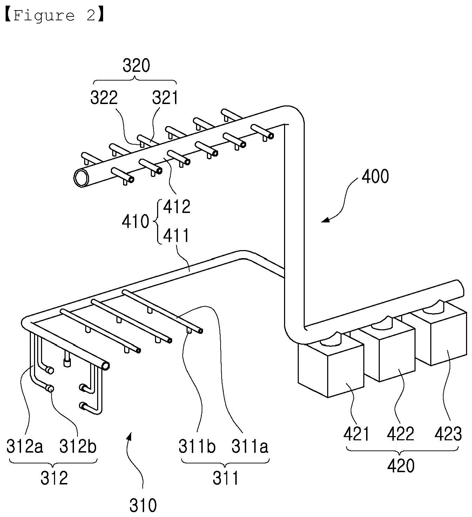

FIG. 1 illustrates a scrubber according to an example embodiment, and FIG. 2 illustrates a treatment unit and a treatment liquid supply unit included in a scrubber according to an example embodiment.

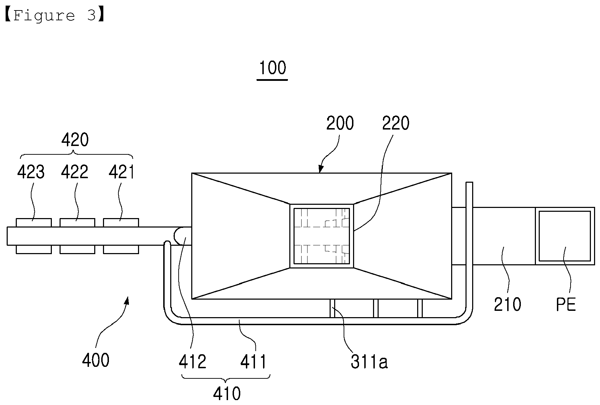

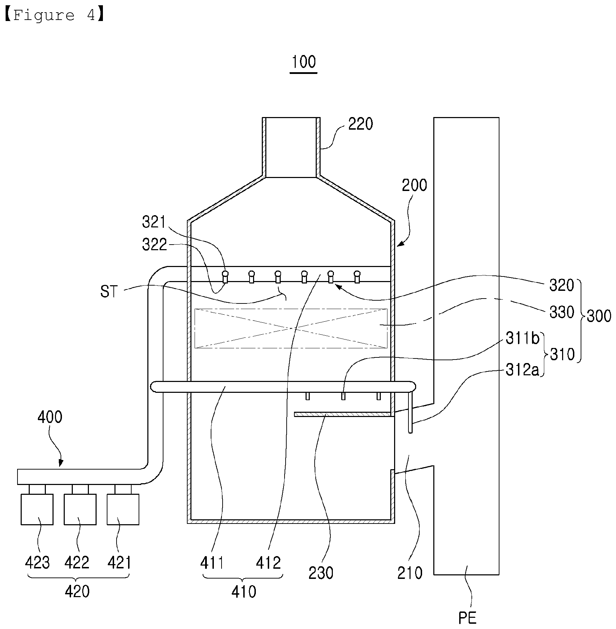

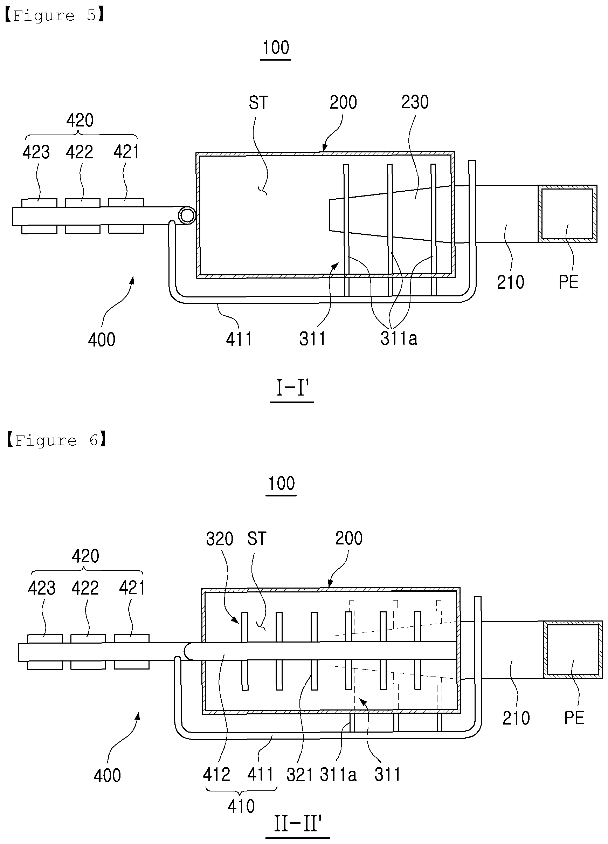

FIG. 3 is a plan view of FIG. 1, FIG. 4 is a partially cutaway side surface of FIG. 1, FIG. 5 is a cross-sectional view taken along line I-I' of FIG. 1, and FIG. 6 is a cross-sectional view taken along line II-II' of FIG. 1.

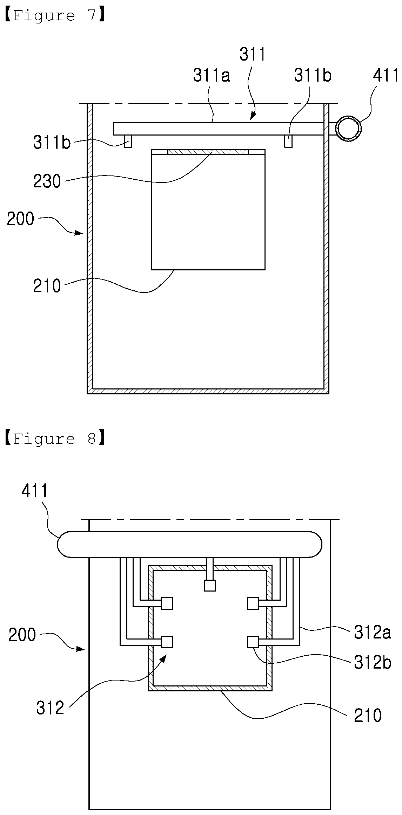

FIG. 7 is a cross-sectional view of a first injection unit included in a pretreatment unit included in a treatment unit of a scrubber according to an example embodiment, and FIG. 8 is a cross-sectional view of a second injection unit included in a pretreatment unit included in a treatment unit of a scrubber according to an example embodiment.

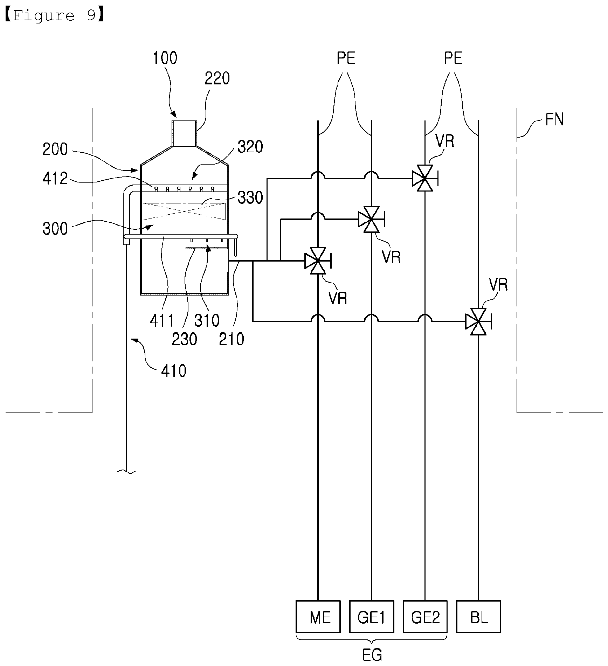

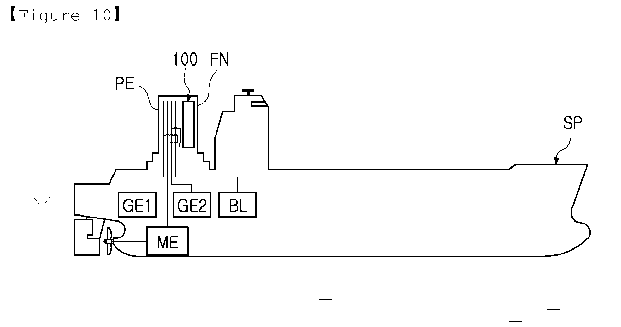

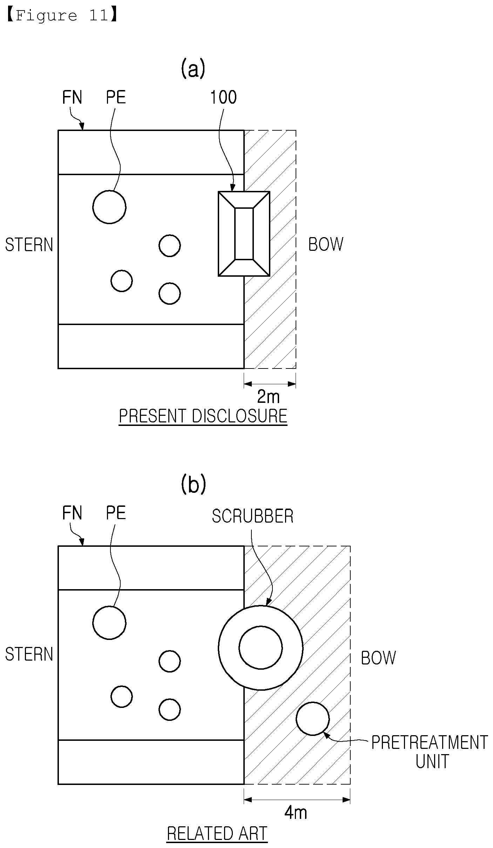

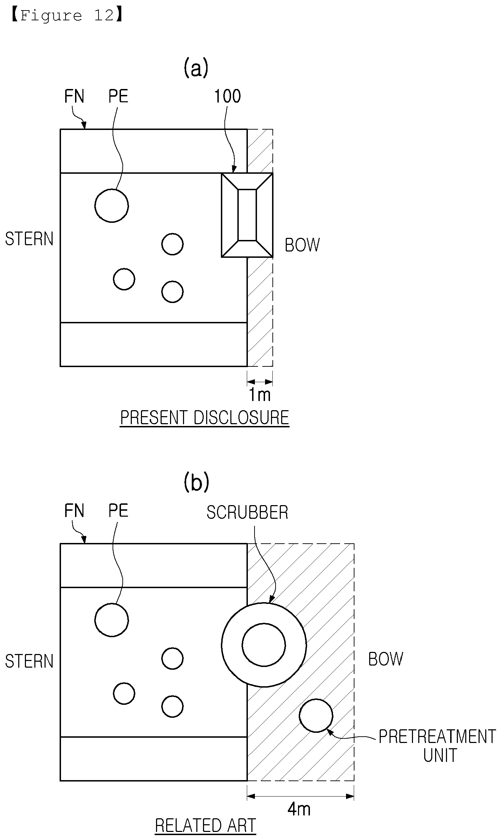

FIG. 9 illustrates that a scrubber according to an example embodiment is installed inside of a funnel to be connected to an engine, or the like, FIG. 10 illustrates that a scrubber according to an example embodiment is installed inside of a funnel of a ship, FIG. 11 illustrates a comparison between a case, in which a scrubber according to an example embodiment is installed inside of a funnel of a ship, and a case in which a scrubber according to a related art is installed inside of a funnel of a ship, and FIG. 12 illustrates a comparison between a case, in which a scrubber according to an example embodiment is integrated with a funnel, and a case in which a scrubber according to a related art is installed inside of a funnel of a ship.

A scrubber 100 according to an example embodiment may have a rectangular cross section, as illustrated in FIGS. 1, 3, 5, and 6.

The scrubber 100 according to an example embodiment may be installed inside of a funnel FN in which an exhaust pipe PE is installed, as illustrated in FIG. 9. For example, the scrubber 100 according to an example embodiment may be installed inside of the funnel FN having a rectangular cross section.

A cross-sectional area of the funnel FN may be increased in a predetermined direction such that the scrubber 100 according to an example embodiment is installed inside of the funnel FN.

For example, the scrubber 100 according to an example embodiment may be installed inside a funnel FN provided on a ship SP, as illustrated in FIG. 10. A cross-sectional area of the tunnel FN may be increased in a bow or stern direction of the ship SP, as indicated by arrows and hatched boxes, to install the scrubber 100 according to an example embodiment. In this case, the cross-sectional area of the funnel FN may not be increased in a width direction of the ship SP. For example, the cross-sectional area of the funnel FN may be increased only in the bow or stern direction of the ship SP.

As described above, since the scrubber 100 according to an example embodiment has a rectangular cross section, as can be seen from FIG. 11, the scrubber 100 may significantly reduce a dead region, which is not used in a funnel FN, as compared with a scrubber according to a related art having a circular cross section. In addition, when the scrubber 100 is installed inside the funnel FN, in the case of the same treatment capacity, an installation area of the scrubber 100 may be smaller than that of the scrubber according to a related art having a circular cross section. Thus, as can be seen from FIG. 11, the scrubber 100 according to an example embodiment may decrease a cross-sectional area of the funnel FN that is increased for installation inside of the funnel FN.

For example, as illustrated in FIG. 11, in the case of the scrubber according to a related art, the funnel FN should elongate by 4 meters in a bow direction of a ship without elongating in a width direction of the ship, while in the case of the scrubber 100 according to an example embodiment, the funnel FN should elongate by only 2 meters in a bow direction of a ship. Thus, the scrubber 100 according to an example embodiment may decrease, by half, the cross-sectional area of the funnel FN increased for installation inside of the funnel FN, as compared with scrubber according to a related art.

On the other hand, as illustrated in FIG. 12, in the case in which the scrubber 100 according to an example embodiment is integrated with a funnel FN, the scrubber 100 may be installed inside of the funnel FN even if the funnel FN elongates by only 1 meter in a bow direction of a ship. Thus, in this case, the scrubber 100 according to an example embodiment may decrease, by a quarter, the cross-sectional area of the funnel FN increased for installation inside of the funnel FN, as compared with the scrubber according to a related art.

As illustrated in FIG. 1, the scrubber 100 according to an example embodiment may include a housing 200 and a treatment unit 300.

Exhaust gas is introduced into the housing 200 and then treated, and the treated exhaust gas may be discharged. As illustrated in FIG. 9, the housing 200 may be installed inside of a funnel FN provided with an exhaust pipe PE connected to an engine EG, such as a main engine ME or power generation engines GE1 and GE2, a boiler BL, or the like. In addition, the housing 200 may be connected to the exhaust pipe PE, and a flow path switching valve VR may be provided on a portion in which the housing 200 and the exhaust pipe PE are connected to each other. The exhaust gas, discharged from the engine EG, the boiler BL, or the like, may be introduced into the housing 200 by handling the flow path switching valve VR.

As described above, since the scrubber 100 according to an example embodiment has a rectangular cross section, the housing 200 may have a rectangular cross section.

As illustrated in FIG. 4, a treatment space ST may be formed in the housing 200. Exhaust gas may be introduced into the housing 200. After flowing in the treatment space ST, the introduced exhaust gas may be discharged. The treatment unit 300 may be provided in the treatment space ST of the housing 200. The exhaust gas, introduced into the housing 200 and flowing in the treatment space ST, may be treated by the treatment unit 300.

The housing 200 may be provided with an inlet duct 210 and an outlet duct 220.

The inlet duct 210 may be connected to the treatment space ST. In addition, as illustrated in FIG. 9, the inlet duct 210 may be connected to a device, for example, the engine EG such as the main engine ME, the power generation engines GE1 and GE2, or the like, the boiler BL, or the like, by the exhaust pipe PE. Accordingly, exhaust gas to be treated, discharged from the engine EG such as the main engine ME, the power generation engines GE1 and GE2, or the like, the boiler BL, and the like, may be introduced into the treatment space ST of the housing 200 through the exhaust pipe PE and the inlet duct 210 to flow in the treatment space ST.

The inlet duct 210 may be provided on a lower portion of the housing 200. As illustrated in FIGS. 1 and 4, the inlet duct 210 may be provided on a lower side surface of the housing 200 at a predetermined height from the bottom of the housing 200. In addition, the inlet duct 210 may be provided in a lower portion of the housing 200 to be inclined at a predetermined angle in a bottom direction of the housing 200.

Accordingly, the exhaust gas, discharged from the engine EG such as the main engine ME, the power generation engines GE1 and GE2, or the like, to flow in the exhaust pipe PE, may be introduced into the treatment space ST through the inlet duct 210 to be inclined toward the bottom of the housing 200. As a result, the exhaust gas may be smoothly introduced into the treatment space ST of the housing 200 without being disturbed by a treatment liquid, such as seawater, supplied from a pretreatment unit 310 included in the treatment unit 300, as will be described later. In addition, exhaust gas treatment efficiency of the scrubber 100 may be improved.

The height from the bottom of the housing 200 of the inlet duct 210 and an angle of inclination of the inlet duct 210 are not limited, and may be any height and any angle of inclination at which the exhaust gas is smoothly introduced into the treatment space ST of the housing 200 without being disturbed by the treatment liquid supplied from the pretreatment unit 310 of the treatment unit 300.

As illustrated in FIGS. 4 and 5, the housing 200 may be provided with a flow guide 230 extending by a predetermined length in a length direction of the housing 200 from the inlet duct 210 to the treatment space ST of the housing 200. For example, the flow guide 230 may extend by a predetermined length in the length direction of the housing 200 from an upper end portion of the inlet duct 210 to the treatment space ST of the housing 200.

The exhaust gas, introduced into the treatment space ST of the housing 200 through the inlet duct 210, may be guided by the flow guide 230 to be smoothly introduced to the treatment space ST of the housing 200 without being disturbed by the treatment liquid supplied from the pretreatment unit 310 of the treatment unit 300. Accordingly, the exhaust gas treatment efficiency of the scrubber 100 may be improved.

A length of the flow guide 230 may be less than or equal to half of a length of the housing 200. When the length of the flow guide 230 is greater than half of the length of the housing 200, the flow guide 230 may disturb the flow of the exhaust gas in the treatment space ST of the housing 200.

Therefore, the flow guide 230 should have a length preventing the flow of the exhaust gas in the treatment space ST of the housing 200 from being disturbed and allowing the exhaust gas to be smoothly introduced and flow in the treatment space ST of the housing 200 without being disturbed by the treatment liquid supplied from the pretreatment unit 310 of the treatment unit 300. In detail, the length of the flow guide 230 may be less than or equal to half of the length of the housing 200.

As illustrated in FIG. 5, the flow guide 230 may have opposite side surfaces, each being spaced by a predetermined distance from an internal surface of the housing 200. Accordingly, the pretreatment unit 310 of the treatment unit 300 may supply a treatment liquid to the exhaust gas, introduced into the treatment space ST of the housing 200, through a gap between each of the opposite side surfaces of the flow guide 230 and the internal surface of the housing 200.

As illustrated in FIG. 5, each of the opposite side surfaces of the flow guide 230 may be inclined inwardly of the housing 200 in a length direction of the housing 200 toward the treatment space ST from the inlet duct 210. For example, a width of the flow guide 230 may be decreased in the length direction of the housing 200 toward the treatment space ST from the inlet duct 210. Thus, an affect of the flow guide 230 on the flow of the exhaust gas may be significantly reduced.

An internal surface of the portion of the housing 200, into which the exhaust gas is introduced through the inlet duct 210, for example, an internal surface of the lower side of the housing 200, may be coated with a coating agent.

Accordingly, even when the exhaust gas, introduced into the treatment space ST of the housing 200 through the inlet duct 210, is pretreated by the pretreatment unit 310 of the treatment unit 300 and thus a sulfur oxide is in contact with the internal surface of the housing 200, the housing 200 may not be corroded by the coating agent. As a result, since the housing 200 may be formed of a low-cost material, not corroded by the coating agent, rather than a relatively high-cost material, the manufacturing costs of the scrubber 100 may be reduced.

In addition, as illustrated in FIG. 12, the scrubber 100 according to an example embodiment may be integrated with the funnel FN. To this end, at least a portion of the housing 200 is made of funnel FN, and housing 200 and funnel FN may be formed of the same or similar material.

In general, since the housing 200 should withstand a high temperature and should have a high corrosion resistance, the housing 200 should be formed of a high-priced material. However, in an example embodiment of the scrubber 100, the housing 200 may be formed of the same or similar low-priced material as the funnel FN by the configuration of the pretreatment unit 310, included in the treatment unit 300, as will be described later , and the above-mentioned coating agent.

For example, in the related art, a housing is formed of a relatively high-priced special metal called '254SMO', while in the present invention, the housing 200 is formed of a stainless steel or carbon steel, a relatively low-priced material, in the same or similar manner as the funnel FN.

The coating agent may be, for example, polyvinyl ester. However, the coating agent is not limited, and any coating agent may be used as the coating agent as long as it may be coated on the internal surface of the housing 200 to prevent the internal surface of the housing 200 from being corroded by a sulfur oxide condensed from exhaust gas by pretreating the exhaust gas by the pretreatment unit 310 of the treatment unit 300.

An outlet duct 220 may be connected to the treatment space ST. The exhaust gas, introduced into the housing 200 and treated by the treatment unit 300 while flowing in the treatment space ST, may be discharged through the outlet duct 220.

The outlet duct 220 may be provided on an upper portion of the housing 200. However, a location of the outlet duct 220 in the housing 200 is not limited, and any location of the housing 200 is possible as long as exhaust gas, introduced into the housing 200 and treated by the treatment unit 300 while flowing in the treatment space ST, may be discharged.

The treatment unit 300 may be provided in the treatment space ST of the housing 200 to process the exhaust gas introduced into the housing 200 and flowing in the treatment space ST.

The treatment unit 300 may include a pretreatment unit 310 and a posttreatment unit 320, as illustrated in FIGS. 1, 2, and 4.

The pretreatment unit 310 may pretreat the exhaust gas introduced into the treatment space ST of the housing 200 through the inlet duct 210.

The pretreatment unit 310 may be provided in a portion of the treatment space ST of a side of the inlet duct 210. For example, the pretreatment unit 310 may be provided in a portion of the treatment space ST above the inlet duct 210, as illustrated in FIG. 4.

As described above, since the pretreatment unit 310 is provided in the treatment space ST of the housing 200, the scrubber 100 according to an example embodiment may decrease a cross-sectional area of the funnel FN, increased for installation inside of the funnel, as compared with a scrubber according to a related art.

The pretreatment unit 310 may supply a treatment liquid to the exhaust gas, introduced into the treatment space ST of the housing 200 through the inlet duct 210, to pretreat the exhaust gas. For example, the pretreatment unit 310 may cool the exhaust gas, introduced into the treatment space ST of the housing 200 through the inlet duct 210, to a temperature of a predetermined temperature or less, for example, 160°C or less, a condensation temperature of the sulfur oxide, and may remove a portion of the sulfur oxide from the exhaust gas.

The treatment liquid, supplied by the pretreatment unit 310 to the exhaust gas introduced into the treatment space ST of the housing 200, may be, for example, seawater. However, the treatment liquid is not limited, and any treatment liquid may be used as the treatment liquid as long as it may pretreat the exhaust gas.

The pretreatment unit 310 may cool the exhaust gas, introduced into the treatment space ST of the housing 200, to a predetermined temperature or less at which the coating agent, coated on the internal surface of the housing 200, is not damaged.

For example, in the pretreatment unit 310, the exhaust gas introduced into the treatment space ST of the housing 200 may be cooled to a temperature of 120°C or less, in more detail, 80°C or less by the treatment liquid.

When the temperature, at which the exhaust gas is cooled by the treatment liquid supplied from the pretreatment unit 310, is less than 160°C, a condensation temperature of the sulfur oxide, but higher than 120°C, there may be damage to the coating agent coated on the internal surface of the portion of the housing 200 to which the exhaust gas is introduced through the inlet duct 210, as described above. Accordingly, the internal surface of the housing 200 may be corroded by the sulfur oxide condensed from the exhaust gas while the exhaust gas, introduced into the treatment space ST of the housing 200 through the inlet duct 210, is pretreated, for example, cooled by the treatment liquid supplied from the pretreatment unit 310.

As a result, the temperature, at which the exhaust gas is cooled by the treatment liquid supplied from the pretreatment unit 310 to prevent the damage to the coating agent coated on the internal surface of the portion of the housing 200 to which the exhaust gas is introduced through the inlet duct 210 (hereinafter referred to as "the cooling temperature of the exhaust gas"), may be, in detail, 120°C or less.

In this case, when the cooling temperature of the exhaust gas is 80°C or less, the damage to the coating agent, coated on the internal surface of the portion of the housing 200 to which the exhaust gas is introduced through the inlet duct 210, may be significantly reduced.

As illustrated in FIG. 2, the pretreatment unit 310 may include a first injection unit 311. The first injection unit 311 may inject the treatment liquid into the exhaust gas flowing in the housing 200. For example, the first injection unit 311 may inject the treatment liquid into the exhaust gas introduced into the treatment space ST of the housing 200 through the inlet duct 210 to flow in the treatment space ST.

The first injection unit 311 may inject the treatment liquid such that a curtain is formed to guide the flow of the exhaust gas, introduced into an inside of the housing 200, for example, the treatment space ST of the housing 200 to flow in the treatment space ST.

Accordingly, since the exhaust gas, introduced into the treatment space ST of the housing 200 through the inlet duct 210, may flow while being in minimal contact with the internal surface of the housing 200, a contact of the sulfur oxide, condensed from the exhaust gas pretreated by supplying the treatment liquid, with the internal surface of the housing 200 may be significantly reduced. As a result, corrosion of the internal surface of the housing 200 by the condensed sulfur oxide may be significantly reduced.

Thus, since the housing 200 does not need to be formed of a relatively high-priced material which is not corroded by sulfur oxides, the manufacturing costs of the scrubber 100 may be reduced.

To this end, the first injection unit 311 may include a first pretreatment supply pipe 311a and a first pretreatment nozzle 311b.

The first pretreatment supply pipe 311a may be a pipe in which a treatment liquid, supplied from the treatment liquid supply unit 400 to be described later, flows and may be provided in a portion of the housing 200 on a side of the inlet duct 210. As illustrated in FIGS. 1 and 5, a plurality of first pretreatment flow pipes 311a may be provided in the treatment surface ST above the flow guide 230 of the housing to be spaced apart from each other by a predetermined distance.

The first pretreatment nozzle 311b may be provided in the first pretreatment flow pipe 311a to inject the treatment liquid into the exhaust gas. As illustrated in FIG. 7, the first pretreatment nozzle 311b may be provided in the first pretreatment flow pipe 311a to inject the treatment liquid through a gap between the flow guide 230 of the housing 200 and the internal surface of the housing 200.

The pretreatment unit 310 may further include a second injection unit 312. The second injection unit 312 may inject the treatment liquid into the exhaust gas flowing in the inlet duct 210 of the housing 200. The second injection unit 312 may inject the treatment liquid into the exhaust gas flowing in the inlet duct 210 from at least a portion of the circumference of the inlet duct 210.

Accordingly, since the exhaust gas, flowing in the inlet duct 210 of the housing 200, may flow while being in minimal contact with the internal surface of the inlet duct 210, a contact of the sulfur oxide, condensed from the exhaust gas pretreated by supplying the treatment liquid, with the internal surface of the inlet duct 210 may be significantly reduced. As a result, corrosion of the internal surface of the inlet duct 210 by the condensed sulfur oxide may be significantly reduced.

In addition, since the exhaust gas, introduced into the treatment space ST of the housing 200 through the inlet duct 210, may flow while being in minimal contact with the internal surface of the housing 200, a contact of the sulfur oxide, condensed from the exhaust gas pretreated by supplying the treatment liquid, with the internal surface of the housing 200 may be significantly reduced. As a result, corrosion of the internal surface of the housing 200 by the condensed sulfur oxide may be significantly reduced.

Therefore, since the housing 200 does not need to be formed of a relatively high-priced material which is not corroded by the sulfur oxide, the manufacturing costs of the scrubber 100 may be reduced.

To this end, the second injection unit 312 may include a plurality of second pretreatment flow pipes 312a and second pretreatment nozzles 312b.

As illustrated in FIG. 8, the plurality of second pretreatment flow pipes 312a may be connected to the circumference of the inlet duct 210 while the treatment liquid, supplied from the treatment liquid supply unit 400, flows. In addition, the second pretreatment nozzle 312b may be provided on the second pretreatment flow pipe 312a to inject the treatment liquid into the exhaust gas flowing in the inlet duct 210.

A first treatment liquid supply pipe 411 to be described later, included in the treatment liquid supply unit 400 to supply the treatment liquid to the pretreatment unit 310, may be connected to the pretreatment unit 310 on outside of the housing 200. For example, the first treatment liquid supply pipe 411 is provided to cover at least a portion of the periphery of the housing 200, as illustrated in FIGS. 1, 3, and 5, and the first treatment liquid supply pipe 411 may be connected to the first pretreatment flow pipe 311a and the second pretreatment flow pipe 312a of the pretreatment unit 310 on outside of the housing 200. Accordingly, the flow of the exhaust gas, flowing in the treatment space ST of the housing 200, may not be disturbed by the first treatment liquid supply pipe 411 having a diameter greater than a diameter of each of the first pretreatment flow pipe 311a and the second pretreatment flow pipe 312a. In addition, the exhaust gas treatment efficiency of the scrubber 100 may be improved.

The posttreatment unit 320 may posttreat the exhaust gas pretreated by the pretreatment unit 310. To this end, the posttreatment unit 320 may be provided in a portion of the treatment space ST of the housing 200, next to the pretreatment unit 310, in a flow direction of the exhaust gas. For example, the posttreatment unit 320 may be provided in a portion of the treatment space ST of the housing 200 above the pretreatment unit 310, as illustrated in FIG. 4. In this case, the posttreatment unit 320 may be provided to be higher than the pretreatment unit 310 by a predetermined height in the treatment space ST of the housing 200.

A plurality of such post-processing units 320 may be provided. The number of the posttreatment units 320 is not limited, and any number thereof is possible as long as they may posttreat the exhaust gas pretreated by the pretreatment unit 310.

The posttreatment unit 320 may supply a treatment liquid to the exhaust gas, pretreated by the pretreatment unit 310, to posttreat the exhaust gas. For example, the posttreatment unit 320 may supply a treatment liquid to the exhaust gas, pretreated by the pretreatment unit 310, to remove the sulfur oxide from the exhaust gas. In the posttreatment unit 320, the treatment liquid, supplied to the exhaust gas pretreated by the pretreatment unit 310, may be, for example, seawater. However, the treatment liquid is not limited, and any treatment liquid may be used as the treatment liquid as long as it may posttreat the exhaust gas pretreated by the pretreatment unit 310.

As illustrated in FIG. 2, the posttreatment unit 320 may include a posttreatment flow pipe 321. The posttreatment flow pipe 321 may be provided in a portion of the treatment space ST of the housing 200, next to the pretreatment unit 310, in the flow direction of the exhaust gas. In addition, the posttreatment flow pipe 321 may be connected to a treatment liquid supply unit 400 supplying treatment liquid such as seawater. For example, the posttreatment flow pipe 321 may be connected to the second treatment liquid supply pipe 412 of the treatment liquid supply pipe 410 of the treatment liquid supply unit 400. Accordingly, the treatment liquid, supplied from the treatment liquid supply unit 400, may flow in the posttreatment flow pipe 321 to be supplied to the exhaust gas pretreated by the pretreatment unit 310.

A plurality of such posttreatment flow pipes 321 may be provided. In this case, a portion of the second treatment liquid supply pipe 412 of the treatment liquid supply pipe 410 of the treatment liquid supply unit 400 may penetrate through the housing 200 to be provided in the treatment space ST of the housing 200, as illustrated in FIG. 6. The plurality of posttreatment flow pipes 321 may be connected to opposite sides of a portion of the second treatment liquid supply pipe 412 of the treatment liquid supply pipe 410, provided in the treatment space ST of the housing 200, in a plurality of columns .

However, the number or arrangement of the posttreatment flow pipes 321 is not limited, and any number or any arrangement is possible as long as they may be provided in a portion of the treatment space ST of the housing 200, next to the pretreatment unit 320, in the flow direction of the exhaust gas to supply the treatment liquid, supplied from the treatment liquid supply unit 400, to the exhaust gas pretreated by the pretreatment unit 310.

As illustrated in FIG. 2, the posttreatment unit 320 may further include a posttreatment nozzle 322. The posttreatment nozzle 322 may be provided in the posttreatment flow pipe 321 to inject the treatment liquid, flowing in the posttreatment flow pipe 321, to the exhaust gas pretreated by the pretreatment unit 310.

A plurality of such posttreatment nozzle 322 may be provided. In this case, for example, one or more posttreatment nozzles 322 may be provided in each of the plurality of posttreatment flow pipes 321.

However, the number or arrangement of the posttreatment nozzles 322 is not limited, and any number or arrangement thereof is possible as long as they may be provided in the posttreatment flow pipe 321 to inject the treatment liquid, flowing in the posttreatment flow pipe 321, into the exhaust gas pretreated by the pretreatment unit 310.

The treatment unit 300 may further include a packing unit 330. The packing unit 330 may be provided in a portion of the treatment space ST of the housing 200 between the pretreatment unit 310 and the posttreatment unit 320 to increase a contact area between the exhaust gas to be posttreated and the treatment liquid.

In this case, the packing unit 330 may be provided in a portion of the treatment space ST next to the pretreatment unit 310 in the flow direction of the exhaust gas, and the posttreatment unit 320 may be provided in a portion of the treatment space ST next to the packing unit 330 in the flow direction of the exhaust 320. For example, as illustrated in FIGS. 1 and 4, the packing unit 330 may be provided in a portion of the treatment space ST above the pretreatment unit 310, and the posttreatment unit 320 may be provided in a portion of the treatment space ST above the packing unit 330.

A configuration of the packing unit 330 is not limited, and any well-known configuration is possible as long as it may increase a contact area between the exhaust gas and the treatment liquid.

As illustrated in FIG. 1, a treatment liquid such as seawater, or the like, may be supplied to the pretreatment unit 310 and the posttreatment unit 320 from the same treatment liquid supply unit 400.

To this end, the treatment liquid supply pipe 410, included in the treatment liquid supply unit 400, may include a first treatment liquid supply pipe 411, connected to the pretreatment unit 310 to supply the treatment liquid to the pretreatment unit 310, and a second treatment liquid supply unit 412 connected to the posttreatment unit 320 to supply the treatment liquid to the posttreatment unit 320.

For example, the first treatment liquid supply pipe 411 may be connected to the first pretreatment flow pipe 311a and the second pretreatment flow pipe 312a of the pretreatment unit 310, and the second treatment liquid supply pipe 412 may be connected to the posttreatment flow pipe 321 of the posttreatment unit 320.

In this case, as described above, the first treatment liquid supply pipe 411 may be provided to cover at least a portion of the periphery of the housing 200 to be connected to the first pretreatment flow pipe 311a and the second pretreatment flow pipe 312a of the pretreatment unit 310 on outside of the housing 200. In addition, the second treatment liquid supply pipe 412 may be connected to the posttreatment flow pipe 321 of the post treatment unit 320 on inside of the housing 200, for example, in the treatment space ST of the housing 200.

In addition, the first treatment liquid supply pipe 411 and the second treatment liquid supply pipe 412 may be included in the treatment liquid supply unit 400 and may share a single pump unit 420 connected to the treatment liquid supply source, not illustrated.

For example, as illustrated in FIGS. 1 and 2, the second treatment liquid supply pipe 412 may be connected to the pump unit 420, and the first treatment liquid supply pipe 411 may branch off from the second treatment liquid supply pipe 412. However, the first treatment liquid supply pipe 411 may be connected to the pump unit 420, and the second treatment liquid supply pipe 412 may branch off from the first treatment liquid supply pipe 411.

A pressure of the treatment liquid, required to be supplied to the exhaust gas from the posttreatment unit 320, is lower than a pressure of the treatment liquid required to be supplied to the exhaust gas from the pretreatment unit 310. Therefore, as described in FIG. 4, the posttreatment unit 320 may be provided in the treatment space ST of the housing 200 to be higher than the pretreatment unit 310 by a predetermined height. This configuration of the the pretreatment unit 310 and the posttreatment unit 320, and the treatment liquid supply unit 400 having the above-described configuration allow the treatment liquid to be supplied to the exhaust gas at the pressures respectively required by the posttreatment unit 320 and the pretreatment unit 310.

The pump unit 420 may include a plurality of pumps 421, 422, and 423. A portion of the plurality of pumps 421, 422, and 423 may or may not be driven depending on the supply amount of the treatment liquid. Except for the above-mentioned portion of the pumps 421, 422, and 423 driven or not driven depending on the supply amount of the treatment liquid, the other pumps 421, 422, and 423 may replace failed pumps 421, 422, and 423 among the portion of the pumps 421, 422, and 423, driven or not driven depending on the supply amount of the treatment liquid.

As illustrated in FIG. 1, the treatment liquid supply unit 400 may include, for example, three pumps 421, 422, and 423. The treatment liquid supply unit 400 may supply the treatment liquid by driving only one of the three pumps 421, 422, and 423 or driving two pump among the three pumps 421, 422, and 423, depending on the supply amount of the treatment liquid. In addition, the rest one of the three pumps 421, 422, and 423 may replace the failed pumps 421, 422, and 423 among the two pumps 421, 422, 423.

The pump unit 420 may be driven at 100% of output, regardless of a load of the engine EG.

The scrubber 100 according to an example embodiment is installed inside of the funnel FN of the ship SP, as described above, and the inlet duct 210 of the housing 200 may be connected to the engine EG of the ship by the exhaust duct PE. In this case, when the ship SP sails on the sea, the load of the engine EG may be increased. Accordingly, since a great amount of exhaust gas should be treated by the scrubber 100, the pumps 421, 422, and 423 may be driven at 100% of output. In addition, when the ship SP sails offshore, the load of the engine EG is low, but seawater used as a treatment liquid in the scrubber 100 has low salinity. Therefore, in order to treat the exhaust gas, a greater amount of the seawater should be supplied as the treatment liquid than when the seawater has high salinity. In this case, the pumps 421, 422, and 423 may be driven at 100% of output.

As a result, the pump unit 420 may be driven at 100% of output, regardless of the load of the engine EG depending on the sailing of the ship SP, to improve exhaust gas treatment efficiency of the scrubber 100.

### Inert Gas Supply Device

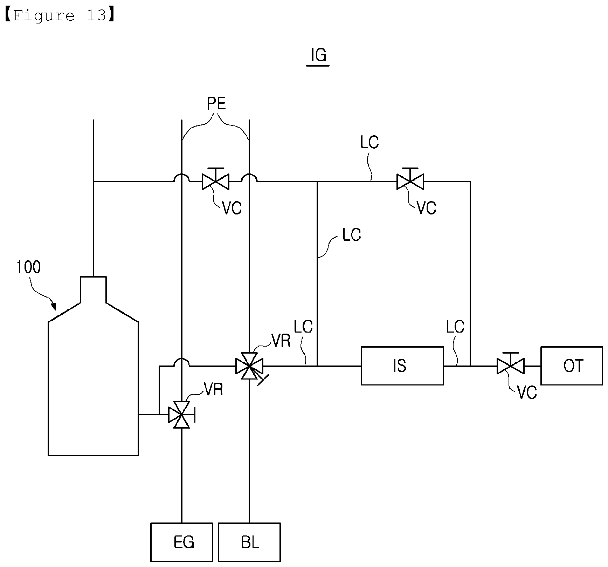

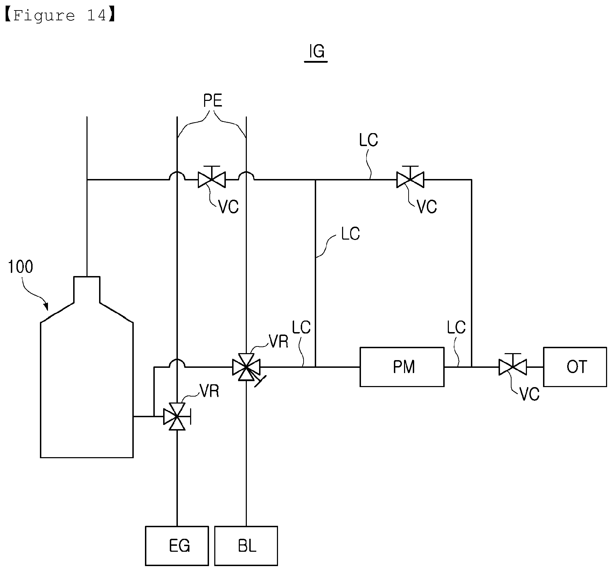

Hereinafter, an inert gas supply unit will be described with reference to FIGS. 13 and 14.

FIGS. 13 and 14 are conceptual diagrams illustrating examples of an inert gas supply device included in a scrubber according to an example, respectively.

An inert gas supply device IG according to the present disclosure may include exhaust gas treatment scrubber 100 and an inert gas production unit, as illustrated in FIGS. 13 and 14.

The exhaust gas treatment scrubber 100 may treat exhaust gas discharged from an engine EG or a boiler BL. As described above, the exhaust gas treatment scrubber 100 may remove and discharge a sulfur oxide from the exhaust gas discharged from the engine EG or the boiler BL. To this end, the exhaust gas treatment scrubber 100 may be connected to the engine EG or the boiler BL by an exhaust duct PE, as illustrated in FIGS. 13 and 14. In addition, the exhaust gas, discharged from the engine EG or the boiler BL, may be introduced into the scrubber 100 to be treated by handling a flow path switching valve VR while flowing therein.

When the exhaust gas, treated and discharged by the exhaust gas treatment scrubber 100, satisfies a predetermined inert gas condition, the exhaust gas may be supplied as an inert gas.

For example, the exhaust duct 220, and the like, of the exhaust gas treatment scrubber 100 may be provided with a gas composition detection sensor, not illustrated, and the like, and the exhaust gas treatment scrubber 100 may be connected to an oil tank OT, in which oil such as crude oil or the like is stored, by a connection line LC, as illustrated in FIGS. 13 and 14. In addition, the gas composition detection sensor may detect whether the exhaust gas, treated and discharged by the exhaust gas treatment scrubber 100, satisfies a predetermined inert gas condition.

When the gas composition detecting sensor detects that the exhaust gas, treated by the exhaust gas treatment scrubber 100, satisfies the predetermined inert gas condition, the exhaust gas, treated by the exhaust gas treatment scrubber 100 and satisfying the predetermined inert gas condition, may be supplied to the oil tank OT as an inert gas by handling an on/off value VC, or the like, provided on the connection line LC. The exhaust gas, supplied to the oil tank OT as the inert gas, may fill the oil tank OT to prevent the oil tank OT from exploding.

The exhaust gas treatment scrubber 100 may be a scrubber 100 including the components described above with reference to FIGS. 1 to 12. However, the configuration of the exhaust gas treatment scrubber 100 is not limited, and any well-known configuration is possible as long as it may treat the exhaust gas discharged from the engine EG or the boiler BL.

When the exhaust gas, treated by the exhaust gas treatment scrubber 100, does not satisfy the predetermined inert gas condition, the inert gas production unit may treat the exhaust gas to satisfy the predetermined inert gas condition and may supply the treated exhaust gas as an inert gas. To this end, the inert gas production unit may be connected to the exhaust gas treatment scrubber 100 by the connection line LC, as illustrated in FIG. 13 and 14. In addition, the inert gas production unit may be connected to the oil tank OT by the connection line LC.

When the gas composition detection sensor detects that the exhaust gas, treated by the exhaust gas treatment scrubber 100, does not satisfy the predetermined inert gas condition, the exhaust gas, treated by the exhaust gas treatment scrubber 100 and not satisfying the predetermined inert gas condition, may be supplied to the inert gas production unit by handling the on/off value VC or the like. The exhaust gas, supplied to the insert gas production unit, may be treated by the inert gas production unit to satisfy the predetermined inert gas condition.

The exhaust gas, treated to satisfy the predetermined inert gas conditions by the inert gas production unit, may be supplied to the oil tank OT as the inert gas by handling the on/off valve VC, or the like, provided on the connection line LC. The exhaust gas, supplied to the oil tank OT as the inert gas, may fill the oil tank OT to prevent the oil tank OT from exploding, and may maintains the inside of the oil tank OT at a constant pressure when oil is unloaded.

The inert gas production unit may be, for example, an inert gas manufacturing scrubber IS, as illustrated in FIG. 13. A configuration of the inert gas manufacturing scrubber IS is not limited, and any well-known configuration is possible as long as it may treat the exhaust gas, supplied from the exhaust gas treatment scrubber 100 and not satisfying the predetermined inert gas condition, to satisfy the predetermined inert gas condition.

As described above, when the exhaust gas, treated by the exhaust gas treatment scrubber 100, is used as an inert gas to fill the oil tank OT, an inert gas may be produced even if a high-sulfur-containing fuel, a low-priced fuel, is used in the boiler BL. Therefore, costs of preparing the inert gas may be reduced.

Since the exhaust gas, treated in the exhaust gas treatment scrubber 100, is in a state in which the sulfur oxide is removed to some extent, the exhaust gas may satisfy the inert gas condition if only a particulate matter is removed from the exhaust gas treated by the exhaust gas treatment scrubber 100.

Accordingly, as illustrated in FIG. 14, the exhaust gas, treated by the exhaust gas treatment scrubber 100, may satisfy the predetermined inert gas condition using a particulate matter removal device PM as the inert gas production unit.

A configuration of the particulate matter removal device PM is not limited, and any well-known configuration is possible as long as it may remove a particulate matter from the exhaust gas treated in the exhaust gas treatment scrubber 100 to satisfy the predetermined inert gas condition.

As described above, when the scrubber according to the present disclosure is used, a pretreatment unit configured to pretreat the exhaust gas is provided inside of a scrubber to reduce a cross-sectional area of a funnel, increased for installation inside of the funnel, to smoothly introduce exhaust gas into the scrubber without being disturbed by a treatment liquid or the like, to improve exhaust gas treatment efficiency of the scrubber, to reduce manufacturing costs of the scrubber, and to significantly reduce corrosion of the scrubber.

The scope of the present disclosure is not limited to the above-described embodiments and the accompanying drawings. It will be apparent to those skilled in the art that various replacements, modifications, and variations could be made without departing from the scope of the present disclosure as defined by the appended claims.

## Claims

1. A scrubber installed inside of a funnel, the scrubber comprising:
a housing; and
a pretreatment unit configured to pretreat exhaust gas,
wherein the pretreatment unit is provided inside of the housing to reduce a cross-sectional area of the funnel increased for installation inside of the funnel.

2. The scrubber of claim 1, wherein the funnel is provided on a ship, and the cross-sectional area of the funnel is increased in a stern or bow direction of the ship to install the scrubber.

3. The scrubber of claim 2, wherein the cross-sectional area of the funnel is not increased in a width direction of the ship.

4. The scrubber of claim 1, wherein the funnel has a rectangular cross section.

5. The scrubber of claim 4, wherein the scrubber has a rectangular cross section to significantly reduce a dead region inside of the funnel and a cross-sectional area of the funnel increased for installation inside of the funnel.

6. The scrubber of claim 1, comprising:
the housing installed inside of the funnel such that exhaust gas, introduced from an exhaust pipe installed inside of the funnel, is discharged while flowing in housing;
the pretreatment unit provided in a treatment space, formed inside of the housing, to pretreat exhaust gas introduced into the treatment space;
a posttreatment unit provided in the treatment space to posttreat the exhaust gas pretreated by the pretreatment unit; and
a packing unit provided in a portion of the treatment space between the pretreatment unit and the posttreatment unit to increase a contact area between a posttreated exhaust gas and a treatment liquid.

7. The scrubber of claim 6, wherein the housing is provided with an inlet duct, connected to the treatment space and an exhaust pipe, into which exhaust gas to be treated is introduced, and an outlet duct, connected to the treatment space, through which a treated exhaust is discharged.

8. The scrubber of claim 7, wherein the pretreatment unit supplies a treatment liquid to the exhaust gas, introduced through the inlet duct, to pretreat the exhaust gas, and
the posttreatment unit supplies a treatment liquid to the exhaust gas, pretreated by the pretreatment unit, to posttreat the exhaust gas.

9. The scrubber of claim 8, wherein an internal surface of a portion of the housing, into which exhaust gas is introduced through the inlet duct, is coated with a coating agent.

10. The scrubber of claim 9, wherein the coating agent is polyvinyl ester.

11. The scrubber of claim 9, wherein the pretreatment unit cools an introduced exhaust gas to a predetermined temperature or less at which the coating agent is not damaged.

12. The scrubber of claim 11, wherein the pretreatment unit cools the introduced exhaust gas to a temperature of 120°C or less.

13. The scrubber of claim 11, wherein the pretreatment unit cools the introduced exhaust gas to a temperature of 80°C or less.

14. The scrubber of claim 8, wherein the inlet duct is provided in a lower portion of the housing, and the outlet duct is provided in an upper portion of the housing.

15. The scrubber of claim 14, wherein the inlet duct is provided on a side surface of a lower portion of the housing having a predetermined height from a bottom of the housing.

16. The scrubber of claim 15, wherein the inlet duct is provided to be inclined toward the bottom of the housing at a predetermined angle.

17. The scrubber of claim 16, wherein the housing is provided with a flow guide extending from the inlet duct to the treatment space in a length direction of the housing by a predetermined length.

18. The scrubber of claim 17, wherein the flow guide has a length less than or equal to half of a length of the housing.

19. The scrubber of claim 18, wherein the flow guide has opposite sides spaced apart from an internal surface of the housing by a predetermined distance.

20. The scrubber of claim 19, wherein each of the opposite surfaces of the flow guide is inclined toward the treatment space from the inlet duct in a length direction of the housing.
